# EUROPEAN PATENT APPLICATION

(11) **EP 4 366 288 A1**
(43) Date of publication of application: **08.05.2024**
(21) Application number: 23755316.9
(22) Date of filing: 28.07.2023
(51) Int. Cl.: H04M 1/72454, H04M 1/02, G06F 3/041, G06F 3/048

(54) **ELECTRONIC DEVICE FOR REDUCING SCREEN PRESENTATION TIME, AND CONTROL METHOD THEREFOR**

(30) Priority: 15.09.2022 KR 20220116485; 29.09.2022 KR 20220124431
(71) Applicant: Samsung Electronics Co., Ltd., Suwon-si, Gyeonggi-do 16677 (KR)
(72) Inventor: KIM, Jungbae, Suwon-si, Gyeonggi-do 16677 (KR); LEE, Euntaik, Suwon-si, Gyeonggi-do 16677 (KR); LEE, Hyeonsu, Suwon-si, Gyeonggi-do 16677 (KR); KIM, Seungjin, Suwon-si, Gyeonggi-do 16677 (KR); SEOK, Jinwoong, Suwon-si, Gyeonggi-do 16677 (KR); KIM, Mooyoung, Suwon-si, Gyeonggi-do 16677 (KR); NA, Boyeon, Suwon-si, Gyeonggi-do 16677 (KR)
(74) Representative: HGF
(86) International application number: PCT/KR2023/011007
(87) International publication number: WO 2024/058415

(57) **Abstract**

An electronic device for reducing a screen providing time and a control method thereof are provided. The electronic device includes a processor, a memory configured to store instructions, a display module configured to be driven in at least one state of a first state or a second state, wherein the second state is different from the first state, and a sensor module configured to detect the state of the display module, wherein, the instructions, when executed by the processor, cause the electronic device to determine whether the display module changes from the first state to the second state, in response to the state of the display module changing to the second state, generate image information obtained by converting an image displayed on the display module in the first state, store the generated image information in the at least one memory, and in response to the display module changing from the second state to the first state, output an image displayed on the display module based on the stored image information. The image information obtained by converting the image displayed on the display module may include information on an image converted from an image desired by a user.

## Description

### BACKGROUND

### 1. Field

The following disclosure relates to an electronic device for reducing a screen providing time and a control method thereof.

### 2. Description of Related Art

As technology related to artificial neural networks develops, research on neural processing units (NPU) progresses. The NPU corresponds to an artificial intelligence (AI) only processor that has a similar purpose to a graphics processing unit (GPU) to quickly perform large amounts of calculations in relation to the same operation in parallel instead of a conventional central processing unit (CPU). The NPU has a lower power consumption and a faster processing speed than the GPU. Recently, various research has been conducted using the NPU to improve a user's experience when using an electronic device.

### SUMMARY

According to an embodiment, an electronic device may comprise a processor, a memory configured to store instructions, a display module configured to be driven in at least one state of a first state or a second state, wherein the second state is different from the first state, and a sensor module configured to detect the state of the display module. When executed by the processor, the instructions cause the electronic device to determine whether the display module changes from the first state to the second state, in response to the state of the display module changing to the second state, generate image information obtained by converting an image displayed on the display module in the first state, store the generated image information in the at least one memory, and in response to the display module changing from the second state to the first state, output an image displayed on the display module based on the stored image information.

According to an embodiment, a control method of an electric device for reducing a screen providing time, the control method may comprise determining whether a driving state of a display module of the electronic device changes from a first state to a second state, generating image information obtained by converting an image displayed on the display module in the first state, in response to the driving state of the display module changing from the first state to the second state, storing the generated image information in a memory, and outputting an image displayed on the display module based on the stored image information, in response to the display module changing from the second state to the first state.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an electronic device in a network environment according to an embodiment;
FIG. 2 is a diagram illustrating a case in which a folding axis of an electronic device according to an embodiment is in the vertical direction and a case in which the folding axis of the electronic device according to an embodiment is in the horizontal direction;
FIG. 3 is a diagram illustrating a fully unfolded state, folded states, and a fully folded state of an electronic device according to an embodiment;
FIG. 4 is a diagram illustrating an out-folding method of an electronic device according to an embodiment;
FIG. 5 is a block diagram illustrating an electronic device for reducing a screen providing time according to an embodiment;
FIG. 6 is a conceptual diagram illustrating the operation principle of an electronic device for reducing a screen providing time according to an embodiment;
FIG. 7 is a flowchart illustrating a general embodiment of generating and outputting image information obtained by converting an image according to a display module state change in a control method of an electronic device according to an embodiment;
FIG. 8 is a flowchart illustrating an embodiment of generating and outputting image information obtained by converting an image according to a display module state change when an electronic device is a foldable or flippable electronic device in a control method of an electronic device according to an embodiment;
FIG. 9 is a flowchart illustrating an embodiment of generating and outputting image information obtained by converting an image according to a display module state change when an electronic device is a bar-type electronic device in an electronic device according to an embodiment; and
FIG. 10 is a flowchart illustrating flow of data in a kernel space when an operation state of a display module changes in an electronic device according to an embodiment.

### DETAILED DESCRIPTION

An electronic device using a dual-display, such as a foldable or flippable electronic device, needs to update an image in a changed display module when an operation state of the display module changes (e.g., use of a secondary display while a main display is in use, or use of a display turned on while the display is turned off, etc.). For example, when a dual display device changes from using one display to using both displays, or vice versa, it is necessary to update the images displayed in the one or two displays accordingly to accommodate the change and maximize the user experience.

Conventionally, when the operation state of the display module of the electronic device is changed by a user, the change in state is detected through a device (e.g., a Hall integrated circuit (IC)) which detects the change in the operation state of a display module. For example, the Hall IC may detect an opening or closing operation performed on the electronic device by the user as an interruption of the Hall IC in the kernel area. The detection of the change is received and processed in a user space to change the display module and update the displayed image. At this time, when a first state of the display module is terminated and the display module enters a second state through an intervention of the user space, and when a graphics processing unit (GPU) draw for an image update is terminated, only then the image may be updated in the second state of the display module. As above, due to various reasons, such as the fact that a display driver operates with the intervention of the user space, a delay time occurs in an image draw in the GPU. The required series of operations which must be performed leads to an update delay which is large enough to be perceived by a user when a display panel changes. As this is a hardware characteristic of a display panel, a user of the electronic device may feel that an image update speed according to the change in the operation state of the display module is not fast enough.

According to an electronic device for reducing a screen providing time and a control method thereof according to an embodiment of the present disclosure, the delay of a first frame that occurs when an operation state of the display module changes may be improved using a scalar, vector, or matrix accelerator of a neural processing unit (NPU) that may provide a part of the same functions as a GPU. Furthermore, delay time may be reduced when the operation state of the display module changes, thereby improving user experience and a performance of the device.

In addition, the switching of a screen of a display when the display changes state requires numerous calculations to be made in a short space of time, so the electronic device is in a high performance state which uses a relatively higher power consumption. Using an NPU to perform some of the functions as a GPU can therefore improve the power consumption of the electronic device by reducing the amount of time in which the system is in a high performance state.

Hereinafter, various example embodiments will be described in greater detail with reference to the accompanying drawings. When describing the example embodiments with reference to the accompanying drawings, like reference numerals refer to like elements and a repeated description related thereto will be omitted.

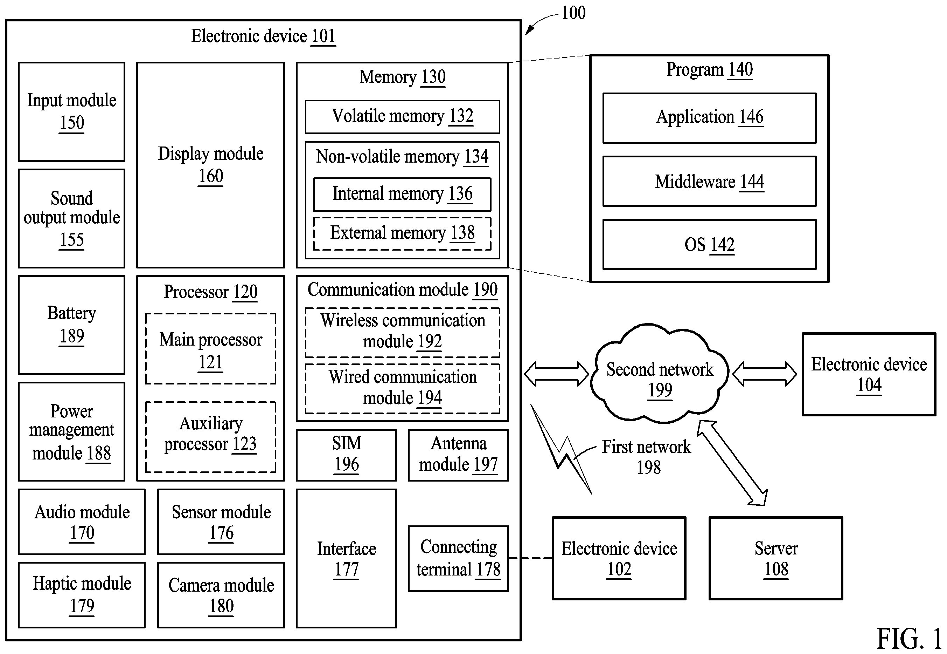

FIG. 1 is a block diagram illustrating an electronic device in a network environment according to an embodiment.

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), an NPU, an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a portion of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence model processing. An artificial intelligence model may be generated by machine learning. Such learning may be performed by, for example, the electronic device 101 in which an artificial intelligence model is executed, or performed via a separate server (e.g., the server 108). Learning algorithms may include, but are not limited to, for example, supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The artificial intelligence model may additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electrical signal or vice versa. According to an embodiment, the audio module 170 may obtain the sound via the input module 150 or output the sound via the sound output module 155 or an external electronic device (e.g., the electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed by the electronic device 101 may be executed at one or more of the external electronic devices 102 and 104, and the server 108. For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least portion of the function or the service requested, or an additional function or an additional service related to the request, and may transfer an outcome of the performing to the electronic device 101. The electronic device 101 may provide the outcome, with or without further processing of the outcome, as at least portion of a reply to the request. To that end, a cloud computing, distributed computing, mobile edge computing (MEC), or client-server computing technology may be used, for example. The electronic device 101 may provide ultra low-latency services using, e.g., distributed computing or MEC. In one embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

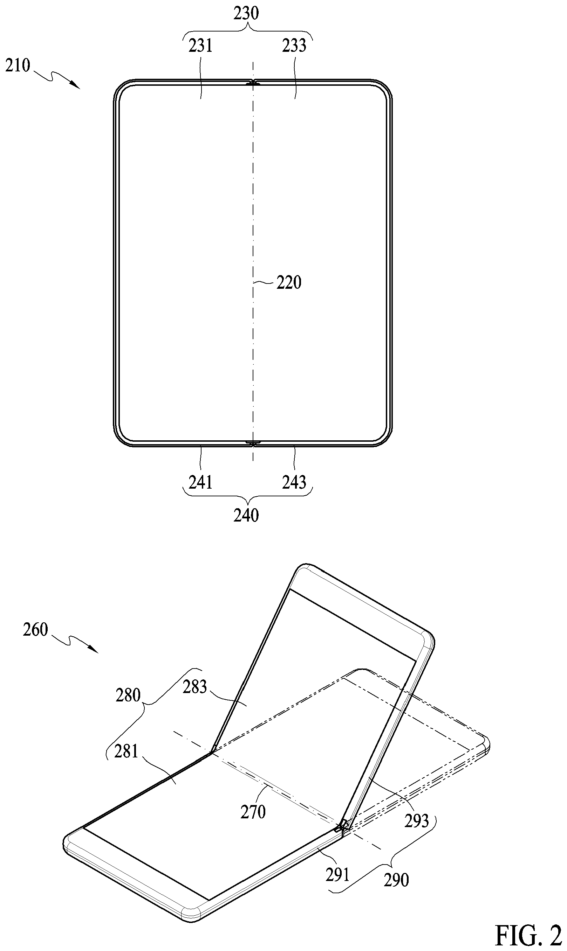

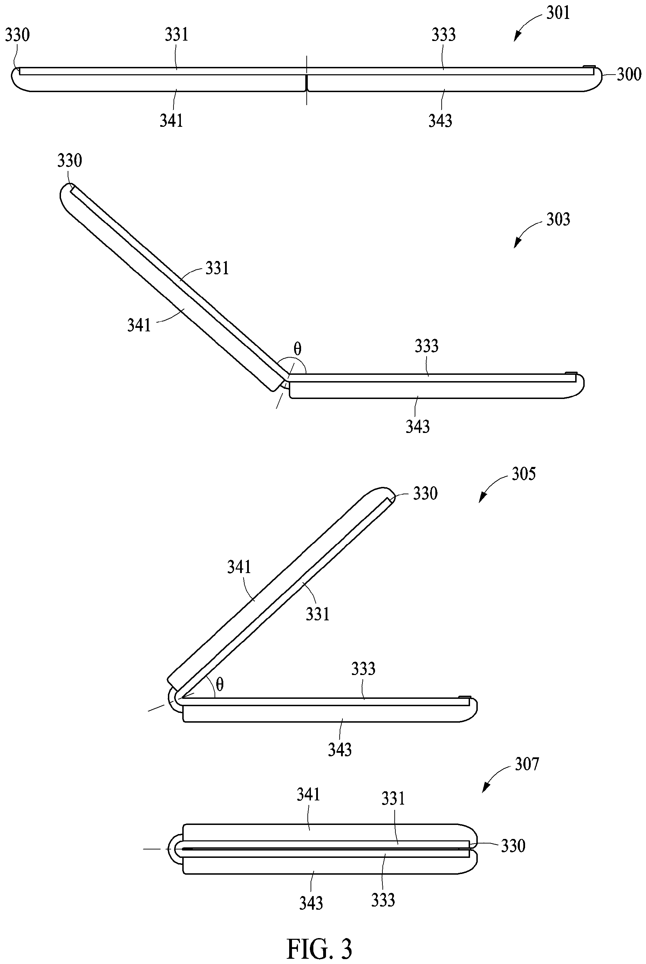

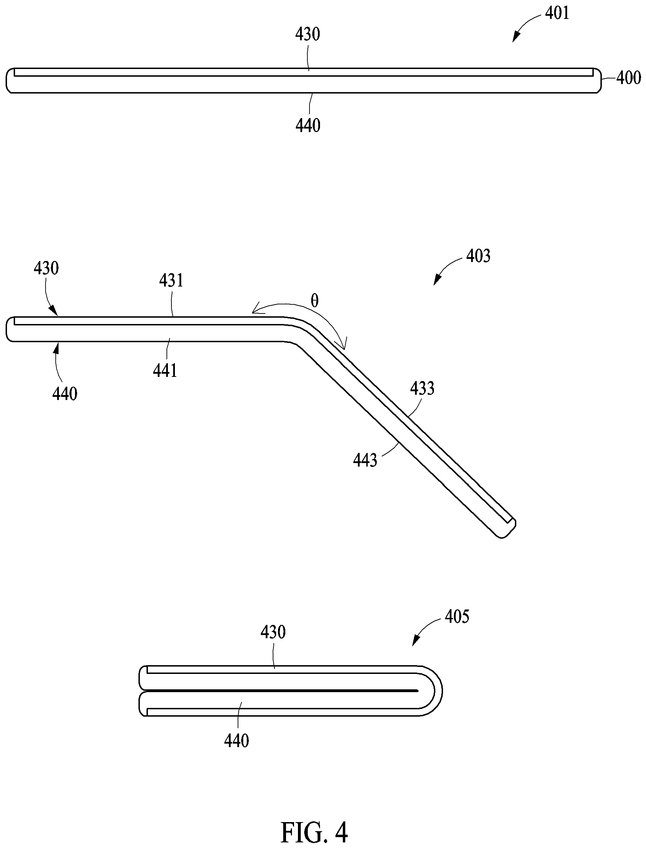

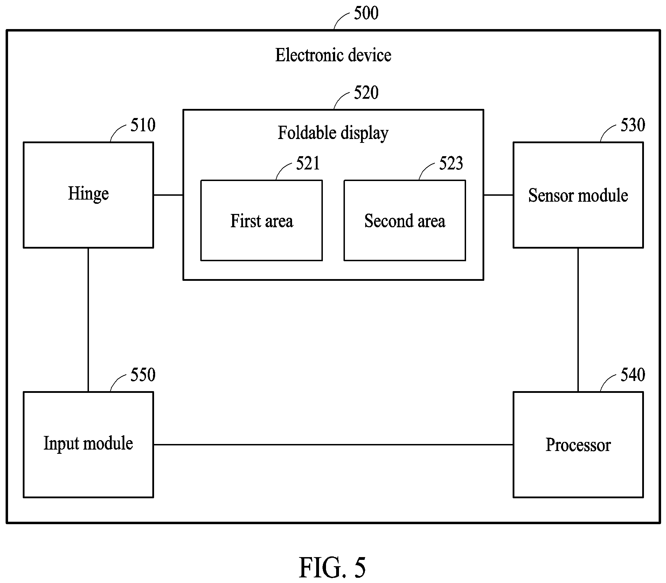

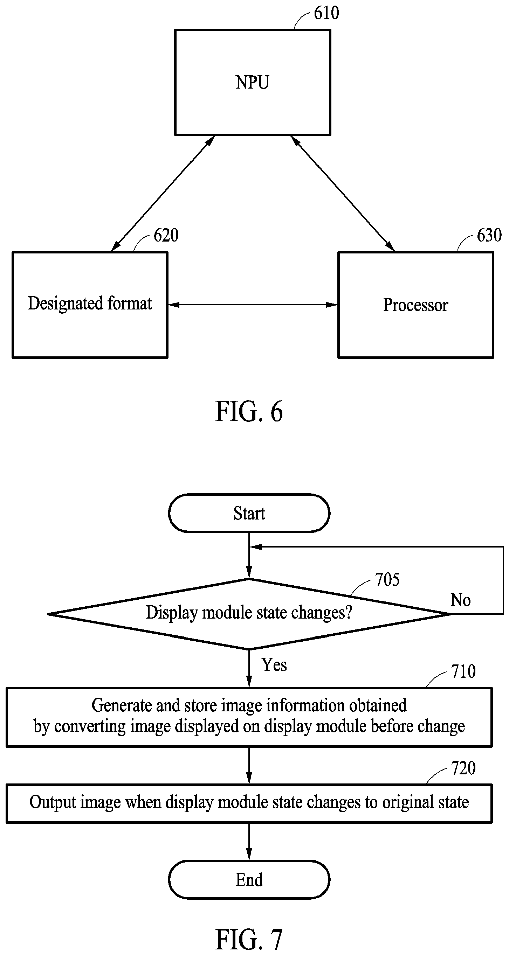

An electronic device according to an embodiment (e.g., the electronic device 101 of FIG. 1, an electronic device 210 of FIG. 2, an electronic device 300 of FIG. 3, an electronic device 400 of FIG. 4, and an electronic device 500 of FIG. 5) may include a processor (e.g., a processor 120 of FIG. 1, a processor 540 of FIG. 5, and a processor 630 of FIG. 6). The electronic device may further include at least one memory (e.g., a memory 130 of FIG. 1) configured to store instructions. The electronic device may further include a display module (e.g., a display module 160 of FIG. 1) configured to be driven in at least one of a first state or a second state, wherein the second state is different from the first state. For example, for a foldable electronic device, the first state may be a state in which a display of the electronic device is folded and the second state may be a state in which the display of the electronic device is unfolded. Alternatively, the first state may be a state in which the display is unfolded, and the second state may be a state in which the display is folded. The electronic device may further include a sensor module (e.g., a sensor module 176 of FIG. 1, and a sensor module 530 of FIG. 5) configured to detect the state of the display module. When the instructions are executed by the processor, the instructions cause the electronic device to determine a change in the state of the display module. In response to determining that the state of the display module changes from the first state to the second state, the instructions cause the electronic device to generate image information obtained by converting an image displayed on the display module in the first state, store the generated image information in the memory, and determine whether the display module changes back from the second state to the first state. In response to determining that the display module changes back to the first state, the instructions cause the electronic device to output an image displayed on the display module based on the stored image information.

The processor may be further configured to generate the image information obtained by converting the image displayed on the display module through an NPU (e.g., an NPU 610 of FIG. 6). Advantageously, this improves the speed at which the image information can be generated because the NPU module is able to perform multiple calculations simultaneously.

The processor may be further configured to generate the image information obtained by converting the image displayed on the display module in the first state into a designated format.

The image information obtained by converting the image may include information on an image obtained by combining, into one layer, images displayed on the display module before the change. The NPU may generate the one layer composition of the image. For example, the information on the image obtained by combining the images may comprise information on image that combined into a single layer by concatenating the images displayed on the display module before the change.

The display module may include a first area (e.g., a first area 521 of FIG. 5) on which a screen is displayed in response to the display module being driven in the first state and a second area (e.g., a second area 523 of FIG.5) on which a screen is displayed in response to the display module being driven in the second state. The display module may perform a frame update using the one layer composition generated by the NPU.

The sensor module may be further configured to measure an angle at which the display module is folded.

The memory may include a first memory configured to store image information obtained by converting the image displayed on the display module in the first state, and a second memory configured to store image information obtained by converting the image displayed on the display module in the second state. The first memory and the second memory may share data between the two memories. The first memory and the second memory may share information between the NPU module and the display module. The first or the second memory module may output the one layer data information to the display processor.

FIG. 2 is a diagram illustrating a case in which a folding axis of an electronic device according to an embodiment is in the vertical direction and a case in which the folding axis of the electronic device according to an embodiment is in the horizontal direction.

Referring to FIG. 2, when the electronic device (e.g., the electronic device 101 of FIG. 1) includes a foldable display, there may be a case where the folding axis is in the vertical direction and a case where the folding axis is in the horizontal direction.

In FIG. 2, both the electronic device 210 when the folding axis is in the vertical direction and an electronic device 260 when the folding axis is in the horizontal direction are in-folding. An electronic device in a case of an out-folding method is described in detail with reference to FIG. 4.

The electronic device 210 (e.g., the electronic device 101 of FIG. 1) when the folding axis is in the vertical direction may include a foldable display 230, a first housing 241, and a second housing 243. The foldable display 230 may be divided into a first area 231 and a second area 233 based on a folding axis 220 of a hinge. The first area 231 and the second area 233 of the foldable display 230 may have a rectangular shape with rounded corners and a narrow bezel.

The electronic device 260 (e.g., the electronic device 101 of FIG. 1) when the folding axis is in the horizontal direction may include a foldable display 280, a first housing 291, and a second housing 293. The foldable display 280 may be divided into a first area 281 and a second area 283 based on a folding axis 270 of a hinge. The folding axis 270 may separate the first area 281 from the second area 283. The first area 281 and the second area 283 of the foldable display 280 may have a rectangular shape with rounded corners and a narrow bezel.

In the electronic device 210 or 260 according to an embodiment, the first area 231 or 281 and the second area 233 or 283 may be folded as the first housing 241 or 291 and the second housing 243 or 293 are folded.

An electronic device (e.g., the electronic device 101 of FIG. 1) for reducing a screen providing time according to an embodiment is described with reference to FIG. 5 when the folding axis is in the vertical direction. However, in an embodiment, the folding axis is not limited to the vertical direction, and a screen may be provided in the first area 281 and the second area 283 even when the folding axis is in the horizontal direction.

FIG. 3 is a diagram illustrating a fully unfolded state, folded states, and a fully folded state of an electronic device according to an embodiment.

Referring to FIG. 3, an electronic device 300 (e.g., the electronic device 101 of FIG. 1, the electronic device 210, or the electronic device 260 of FIG. 2) may include a foldable display 330 (e.g., the foldable display 230 or the foldable display 280 of FIG. 2), a first housing 341, and a second housing 343.

A state 301 may be a fully unfolded state or an unfolded state of the electronic device 300.

In state 301, the electronic device 300 may be folded. For example, the electronic device 300 may be folded as the first housing 341 and/or the second housing 343 are folded.

According to an embodiment, as the electronic device 300 is folded, a first area 331 and a second area 333 of the foldable display 330 may form an angle θ based on a folding axis (e.g., the folding axis 220 or the folding axis 270 of FIG. 2), such as a state 303 and a state 305. When the angle θ is within a predetermined range, it may be referred to as a "folded state" and the angle θ formed between the first area 331 and the second area 333 may be referred to as a "folding angle".

According to an embodiment, the folding angle in the folded state 303 may be about 135 degrees and the folding angle in the folded state 305 may be about 45 degrees.

A state 307 may indicate a fully folded state of the electronic device 300.

At least a part of the foldable display 330 may be the same as or similar to the display module 160 described with reference to FIG. 1.

In a case of the example illustrated in FIG. 3, the first area 331 and the second area 333 are folded to face each other. In other words, a screen is folded inward. This folding method is referred to as an in-folding method. Alternatively, the first area 331 and the second area 333 may be configured to be folded to face in opposite directions. In other words, the screen may be configured to be folded outward. This folding method is referred to as an out-folding method. An example in which the out-folding method is applied is described below with reference to FIG. 4.

FIG. 4 is a diagram illustrating an out-folding method of an electronic device according to an embodiment.

Referring to FIG. 4, an electronic device 400 (e.g., the electronic device 101 of FIG. 1, the electronic device 210, or the electronic device 260 of FIG. 2) may include a foldable display 430 (e.g., the foldable display 230 or the foldable display 280 of FIG. 2) which is out-foldable. In a case of an out-folding, only the folding direction is opposite to that of the case of the in-folding described with reference to FIG. 3, and therefore, repeated descriptions are omitted.

A state 401 may be a fully unfolded state or an unfolded state of the electronic device 400.

In a state 403, the foldable display 430 may be out-folded, and as in the state 403, the foldable display 430 may form a folding angle θ between a first area 431 (e.g., the first area 231 or the first area 281 of FIG. 2) and a second area 433 (e.g., the second area 233 or the second area 283 of FIG. 2).

A state 405 may indicate a fully folded state of the electronic device 400.

At least a part of the foldable display 430 may be the same as or similar to the display module 160 described with reference to FIG. 1.

FIG. 5 is a block diagram illustrating an electronic device for reducing a screen providing time according to an embodiment.

Referring to FIG. 5, an electronic device 500 for reducing a screen providing time according to an embodiment (e.g., the electronic device 101 of FIG. 1) may include a hinge 510, a foldable display 520, a sensor module 530 (e.g., the sensor module 176 of FIG. 1), a processor 540 (e.g., the processor 120 of FIG. 1), and an input module 550 (e.g., the input module 150 of FIG. 1). However, the embodiments of the disclosure are not limited to foldable electronic devices, and the concepts disclosed herein may apply to any electronic device comprising two or more displays or display regions.

According to an embodiment, the hinge 510 allows the electronic device 500 to be folded or unfolded and as the electronic device 500 is folded or unfolded around the hinge 510, the foldable display 520 (e.g., the foldable display 230 or the foldable display 280 of FIG. 2) may also be folded or unfolded. The foldable display 520 may be disposed on at least one side of the electronic device 500 and may include a first area disposed on one side and a second area disposed on the other side with respect to the hinge 510.

According to an embodiment, when the folding axis of the hinge 510 is in the vertical direction and an in-folding method is performed, the foldable display 520 (e.g., the foldable display 230 of FIG. 2) may include a first area 521 (e.g., the first area 231 of FIG. 2) disposed on one side and a second area 523 (e.g., the second area 233 of FIG. 2) disposed on the other side with respect to the hinge 510.

According to an embodiment, when the folding axis of the hinge 510 is in the horizontal direction and an in-folding method is performed, the foldable display 520 (e.g., the foldable display 280 of FIG. 2) may include the first area 521 (e.g., the first area 281 of FIG. 2) disposed on one side and the second area 523 (e.g., the second area 283 of FIG. 2) disposed on the other side with respect to the hinge 510.

According to an embodiment, when the folding axis of the hinge 510 is an out-folding method, the foldable display 520 (e.g., the foldable display 430 of FIG. 4) may include the first area 521 (e.g., the first area 431 of FIG. 4) disposed on one side and the second area 523 (e.g., the second area 433 of FIG. 4) disposed on the other side with respect to the hinge 510.

According to an embodiment, the sensor module 530 (e.g., the sensor module 176 of FIG. 1) may detect a folding angle (e.g., the folding angle θ of FIG. 3 in the case of in-folding and the folding angle θ of FIG. 4 in the case of out-folding) of the electronic device 500. The sensor module 530 according to an embodiment may be a Hall sensor, an acceleration sensor, and/or a gyro sensor (e.g., a gyroscope), and the acceleration sensor and/or the gyro sensor may detect the folding angle of the electronic device 500. The sensor module 530 according to an embodiment may be disposed in the hinge 510 to detect the number of rotations of a gear and may detect the folding angle of the electronic device 500. The sensor module 530 according to an embodiment may detect not only the folding angle but also a folding start point and an angle at which the folding stops.

For example, the sensor module 530 may be a Hall sensor. The Hall sensor may be a transducer means for generating an electrical signal (e.g., voltage) in response to a magnetic field. The Hall sensor may generate an electrical signal of relatively high intensity when the intensity of the magnetic field is high and may generate an electrical signal of relatively low intensity when the intensity of the magnetic field is low. The Hall sensor may be located in a first housing (e.g., the first housing 241 or the first housing 291 of FIG. 2), and an element generating the magnetic field (e.g., a magnetic material) may be located in a second housing (e.g., the second housing 243 or the second housing 293 of FIG. 2). Depending on embodiments, the Hall sensor may be located in the second housing (e.g., the second housing 243 or the second housing 293 of FIG. 2) and the magnetic material may be located in the first housing (e.g., the first housing 241 or the first housing 291 of FIG. 2). When the electronic device 500 changes from a fully unfolded state to a folded state, the Hall sensor may be closer to the magnetic material and may detect the folded state of the foldable display 520 in response to the magnetic field of the magnetic material. In addition, the Hall sensor may detect the folding angle through the intensity of the electrical signal generated in response to the magnetic field.

The Hall sensor is an example of the sensor module 530, and the sensor module 530 is not limited to the Hall sensor. According to an embodiment, the folding angle of the electronic device 500 may be detected using a magnetic (geomagnetic) sensor and a Hall sensor. For example, the geomagnetic sensor and the Hall sensor may include a transmitter for generating a magnetic field of a specific frequency and a receiver for receiving the magnetic field generated by the transmitter and may detect the folding angle of the electronic device 500 based on a state change (e.g., the state change according to the state 301 to the state 307 of FIG. 3 or the state change according to the state 401 to the state 405 of FIG. 4) of the electronic device 500. For example, the magnetic (geomagnetic) sensor may measure a direction using the magnetic field and a line of magnetic force, and the Hall sensor may detect the intensity of the magnetic field to confirm the state change of the electronic device 500 and may detect the folding angle (e.g., the folding angle θ of FIG. 3 in the case of in-folding and the folding angle θ of FIG. 4 in the case of out-folding) according to the confirmed state change.

Previously, although it has been described that the sensor module 530 detects the folded state of the foldable display 520 and detects the folding angle of the electronic device 500, according to an embodiment, the processor 540 may detect the folded state of the foldable display 520 based on a sensing result of the sensor module 530 and may calculate the folding angle. For example, the processor 540 may receive an electrical signal according to the magnetic field detection from the Hall sensor. The processor 540 may detect the folded state of the foldable display 520 by receiving the electrical signal from the Hall sensor. In addition, the processor 540 may calculate the folding angle of the foldable display 520 based on the intensity of the electrical signal received from the Hall sensor.

FIG. 6 is a conceptual diagram illustrating an operation principle of an electronic device for reducing a screen providing time according to an embodiment.

Referring to FIG. 6, when an operation state of a display module changes from a first state to a second state, the electronic device may generate information on an image obtained by combining images, into one layer, displayed on the display module, and when the operation state of the display module changes back from the second state to the first state, the electronic device may include an NPU 610 for generating the image information obtained by converting an image displayed on the display module in the first state and a processor 630 for processing the image information generated by the NPU 610. The image information obtained by converting the image generated by the NPU 610 may include information on an image obtained by combining, into one layer, a plurality of images displayed on the display module. The information may comprise file descriptor information or composition layer information relating to the combined one-layer image. The image information obtained by converting the image generated by the NPU 610 may be converted into a designated format 620 that is readable by all different accelerators to manage the processor 630, and may be stored and executed. That is, the image information itself may be converted into the designated format. At this time, the designated format 620 may have a data structure related to a buffer (e.g., a direct memory access (DMA)-buffer (BUF)) managed by a memory manager (e.g., android ION) executed by the electronic device. An ION form means a memory form for integrated memory management among various processors (e.g., a GPU, a digital signal processor (DSP), and Codec) for memory sharing between processes within an operating system (e.g., Android). A DMA-BUF form means a memory form for managing a memory so that a buffer located in each GPU may be used by other GPUs when multiple GPUs are used. In an embodiment, information on an image converted into the designated format 620 may be transmitted to the processor 630. In an embodiment, the NPU 610 may transmit to the processor 630, file descriptor information on the image obtained by combining, into one layer, the plurality of images displayed on the display module. In an embodiment, the processor 630 may transmit, to the NPU 610, composition layer information obtained by combining the plurality of images into one layer. As described above, when the operation state of the display module changes from the first state to the second state, the image information obtained by converting the image obtained by combining images, into one layer, displayed on the display module may be generated by the NPU 610 and may be converted into the designated format 620 for managing by the processor 630. In addition, when the operation state of the display module changes back from the second state to the first state and is executed, the image may be provided based on the image information in the designated format 620 through the processor 630 immediately. Through this, even when the operation state of the display module in the existing electronic device changes (e.g., a case of resuming after entering suspension), the image before changing the operation state may be stored into one layer and the image may be immediately provided using the NPU 610. Conventionally, when the operation state of the display module changes (e.g., a change of the display module from an off state to an on state), a synchronization image processing time with a terminal emulator (TE) signal is required to transmit a command to display a screen to a panel, when the image is provided through a CPU or GPU. However, since the electronic device according to an embodiment of the present disclosure completes the image transmission using the NPU 610 prior to transmitting the command to display the screen to the panel, even when the state of the display module of the electronic device changes, the image may be provided without synchronizing with the TE signal. This therefore reduces the time taken to display the image on a display of the electronic device because it is not necessary to wait for the TE signal to transmit a command to the display panel.

FIG. 7 is a flowchart illustrating a general embodiment of generating and outputting image information obtained by converting an image according to a display module state change in a control method of an electronic device according to an embodiment.

Referring to FIG. 7, the electronic device according to an embodiment may determine whether the state of the display module changes in operation 705. In an embodiment, for example, the state change of the display module may include a case when the operation state of the display module changes by folding or flipping of the display module of an electronic device with a display of fold/flip functions or a case when the power of the display module changes from on to off in a bar-type electronic device. For example, the state of the display module may change from a folded state to an unfolded state, or vice versa. In an embodiment, for example, the state change of the display module may be determined based on a sensor module. The state change may also or additionally be determined based on the state change of other electronic devices.

In operation 710, the electronic device according to an embodiment may generate and store image information obtained by converting an image displayed on the display module before the change of state of the electronic device. In an embodiment, the image information obtained by converting the image, for example, may include information on an image obtained by combining images, into one layer, displayed on the display module before the change. In an embodiment, for example, the image information obtained by converting the image may be stored in a memory. In an embodiment, for example, the image information obtained by converting the image displayed on the display module in the first state may be stored in a first memory and the image information obtained by converting the image displayed on the display module in the second state may be stored in a second memory.

In operation 720, the electronic device according to an embodiment may output the stored image when the display module changes to an existing state. In an embodiment, for example, when the operation state of the display module of the electronic device changes from the first state to the second state and then changes back from the second state to the first state, the electronic device may output the image stored in the display module in the first state based on the image information obtained by converting the image displayed on the display module in the first state stored in operation 710. That is, when a state of the electronic device changes from one state to a different state, and then changes back to the original state, the electronic device may output an image on the display module based on the stored image information which was obtained during the first change of state.

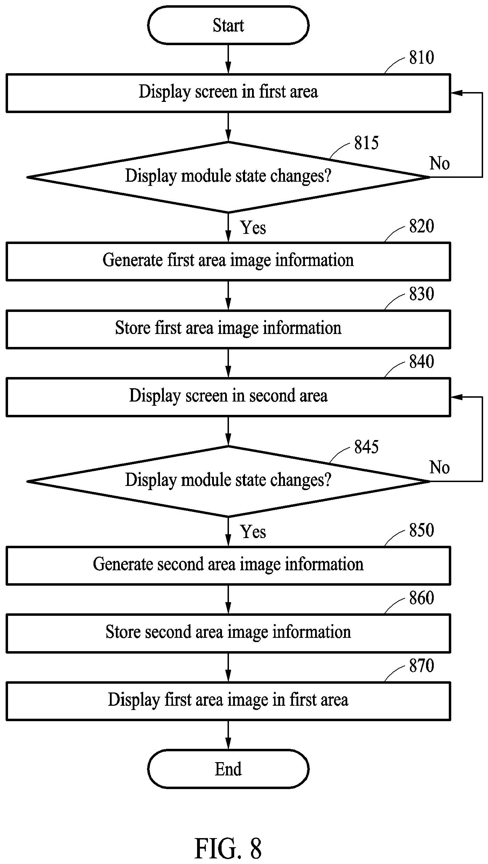

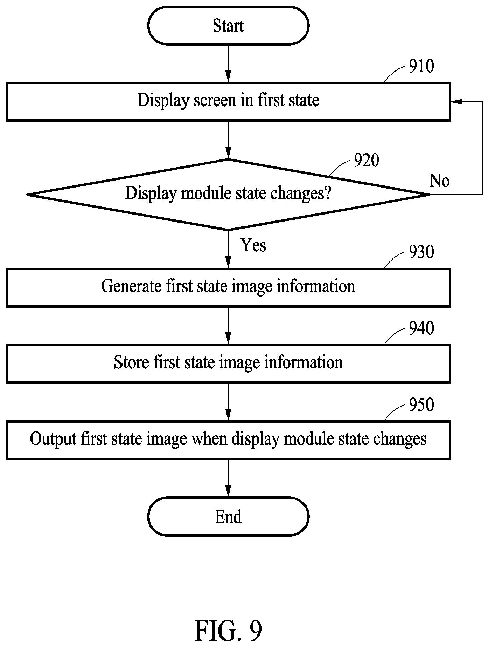

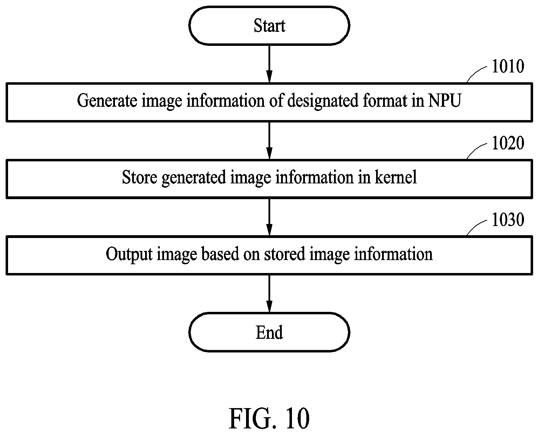

A control method of the electronic device for reducing a screen providing time according to an embodiment may include determining whether a driving state of the display module of the electronic device changes from the first state to the second state (e.g., operation 705 of FIG. 7, operation 815 of FIG. 8, and operation 920 of FIG. 9). The control method of the electronic device may further include generating the image information obtained by converting the image displayed on the display module in the first state (e.g., operation 710 of FIG. 7, operation 820 or 850 of FIG. 8, operation 930 of FIG. 9, and operation 1010 of FIG. 10) , in response to the driving state of the display module changing from the first state to the second state. The control method of the electronic device may further include storing the generated image information in the memory (e.g., operation 710 of FIG. 7, operation 830 or 860 of FIG. 8, operation 940 of FIG. 9, and operation 1020 of FIG. 10). The control method of the electronic device may further include outputting the image displayed on the display module based on the stored image information, in response to the display module changing from the second state to the first state (e.g., operation 720 of FIG. 7, operation 840 or 870 of FIG. 8, operation 950 of FIG. 9, and operation 1030 of FIG. 10).

The generating of the image information obtained by converting the image may further include generating the image information obtained by converting the image displayed on the display module through an NPU. Advantageously, the NPU can perform multiple calculations at the same time, which reduces the overall time to generate the image information.

The generating of the image information obtained by converting the image may further include generating the image information obtained by converting the image displayed on the display module in the first state into a designated format.

The generating of the image information obtained by converting the image may further include generating information on an image obtained by combining, into one layer, images displayed on the display module before the change.

The display module may include a first area on which a screen is displayed in response to the display module being driven in the first state and a second area on which a screen is displayed in response to the display module being driven in the second state.

The determining of whether the driving state of the display module changes from the first state to the second state may include measuring through a sensor module an angle at which the display module is folded.

The memory may include a first memory configured to store the image information obtained by converting the image displayed on the display module in the first state and a second memory configured to store the image information obtained by converting the image displayed on the display module in the second state.

FIG. 8 is a flowchart illustrating an embodiment of generating and outputting image information obtained by converting an image according to a display module state change when an electronic device is a foldable or flippable electronic device in a control method of an electronic device according to an embodiment. With respect to FIG. 8 below, an embodiment in which the state of the display module of the foldable or flippable electric device changes is described.

Referring to FIG. 8, the electronic device according to an embodiment may display a screen on a first area of the display module in operation 810. The electronic device may determine whether the state of the display module changes from the first state to the second state through folding or flipping in operation 815. In an embodiment, for example, when the state of the display module of the electronic device changes from the first state to the second state through folding or flipping, the electronic device may generate first area image information provided to the first area in operation 820. The first area image information may be generated through an NPU. Alternatively, the electronic device may determine whether a state of the display module changes based on a user input.

In an embodiment, the electronic device may store the first area image information in operation 830. The first area image information may be the image information converted into a designated format. The first area image information may be stored in a first memory included in the memory.

In an embodiment, when the state of the display module changes from the first state to the second state, the electronic device may display the screen on a second area in operation 840. The electronic device may determine whether the state of the display module changes from the first state to the second state through folding or flipping in operation 845. In an embodiment, for example, when the state of the display module of the electronic device changes from the second state to the first state through folding or flipping, the electronic device may generate second area image information provided to the second area in operation 850. The second area image information may be generated through the NPU and may be immediately provided to the second area when the state of the display module changes from the first state to the second state (not illustrated).

In an embodiment, the electronic device may store the second area image information in operation 860. The second area image information may be the image information converted into the designated format. The second area image information may be stored in a second memory included in the memory. When the state of the display module changes back from the second state to the first state, the electronic device may display the first area image in the first area in operation 870 based on the first area image information generated and stored in operations 820 and 830.

FIG. 9 is a flowchart illustrating an embodiment of generating and outputting image information obtained by converting an image according to a display module state change when an electronic device is a bar-type electronic device in an electronic device according to an embodiment. With reference to FIG. 9 below, an embodiment will be described in which the state of the display module of a bar-type electric device changes.

Referring to FIG. 9, the electronic device according to an embodiment may display a first state screen on a screen, when the display module is in a first state (e.g., a state in which the display module is turned on) in operation 910. An image provided on the first state screen may include, for example, a lock screen image or other images set by a user. In operation 920, the electronic device may determine whether the state of the display module changes from the first state to the second state (e.g., a state in which the display module is turned off). In an embodiment, for example, when the state of the display module of the electronic device changes from the first state to the second state, the electronic device may generate first state screen image information provided to the screen in the first state in operation 930. In an embodiment, the first state screen image information may be generated through an NPU.

In an embodiment, the electronic device may store the first state screen image information in operation 940. The first state screen image information may be converted into a designated format readable by all different accelerators to manage the processor and may be stored and executed. At this time, the designated format may have a data structure related to a buffer (e.g., a DMA-BUF) managed by a memory manager (e.g., ION) executed by the electronic device. In an embodiment, when the state of the display module changes back from the second state to the first state, the electronic device may output the first state image on the screen in operation 950. Similar to the case of the foldable or flippable electronic device in FIG. 8 above, even in the case of a bar-type electronic device, when the operation state of the display module changes from the first state to the second state, information on an image provided in the first state before the change may be generated through the NPU, and when the operation state of the display module changes back from the second state to the first state, the first state image may be output on the screen based on the stored first state image information.

FIG. 10 is a flowchart illustrating flow of data in a kernel space when an operation state of a display module changes in an electronic device according to an embodiment.

Referring to FIG. 10, in operation 1010, the electronic device may generate image information in the form of ION or DMA-BUF in an NPU. The image information converted into the ION or DMA-BUF format may be used to manage a memory through a processor.

In operation 1020, the generated image information may be stored in a kernel. In an embodiment, for example, the image information may be converted into a designated format readable by all different accelerators included in the electronic device and may be stored in the kernel. At this time, the designated format may have a data structure related to a buffer (e.g., a DMA-BUF) managed by a memory manager (e.g., ION) executed by the electronic device. In the designated format, information (e.g., file descriptor information) may be transmitted to the processor without intervention of a separate user space, and the transmitted information may be stored in the memory.

In operation 1030, the electronic device may output an image based on the stored image information. In an embodiment, for example, in the case of the electronic device with fold/flip functions, when the image is output in a first area, the image may be output based on the image information obtained by converting the image displayed on the display module in the first state, and when the image is output to a second area, the image may be output based on the image information obtained by converting the image displayed on the display module in the second state. In an embodiment, for example, in the case of a bar-type electronic device, the operation state of the display module changes from the first state to the second state according to whether the display module is activated (for example, by a user input to activate the second state), and when the operation state of the display module changes back from the second state to the first state, the first state image may be output by outputting the image stored in the memory.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that the above-described embodiments, and their technical featur es, may be combined with one another in each and every combination, potentially unl ess there is a conflict between two embodiments or features. That is, each and every combination of two or more of the above-described embodiments is envisaged and inc luded within the present disclosure. One or more features from any embodiment may be incorporated in any other embodiment, and provide a corresponding advantage or a dvantages.

## Claims

1. An electronic device (101; 210; 300; 400; 500) comprising:
a processor (120; 540; 630);
a memory (130) configured to store instructions;
a display module (160) configured to be driven in at least one state of a first state or a second state, wherein the second state is different from the first state; and
a sensor module (176; 530) configured to detect the state of the display module;
wherein the instructions, when executed by the processor (120; 540; 630), cause the electronic device to:
determine a change in the state of the display module(160); and
in response to determining that the state of the display module (160) changes from the first state to the second state:
generate image information obtained by converting an image displayed on the display module in the first state;
store the generated image information in the memory;
determine whether the display module (160)changes back from the second state to the first state: and
in response to determining that the display module (160) changes back to the first state, output an image displayed on the display module (160)based on the stored image information.

2. The electronic device of claim 1, wherein
the processor (120; 540; 630) is further configured to generate the image information by converting the image displayed on the display module (160) through a neural processing unit (NPU) (610).

3. The electronic device of claim 1 or claim 2, wherein
the processor (120; 540; 630) is further configured to generate the image information by converting the image displayed on the display module (160) in the first state into a designated format.

4. The electronic device of any of the preceding claims, wherein
the image information obtained by converting the image comprises information on an image obtained by combining images displayed on the display module (160) before the change into one layer.

5. The electronic device of any of the preceding claims, wherein
the display module (160) comprises a first area (521) on which a screen is displayed in response to the display module (160) being driven in the first state and a second area (523) on which a screen is displayed in response to the display module (160) being driven in the second state.

6. The electronic device of claim 5, wherein
the sensor module (176;530) is further configured to measure an angle at which the display module (160) is folded.

7. The electronic device of any of the preceding claims, wherein
the memory (130) comprises:
a first memory configured to store the image information obtained by converting the image displayed on the display module (160) in the first state; and
a second memory configured to store the image information obtained by converting the image displayed on the display module (160) in the second state.

8. A control method of an electronic device (101; 210; 300; 400; 500) for reducing a screen providing time, the control method comprising:
determining (705; 815; 920) a change in a driving state of a display module of the electronic device (101; 210; 300; 400; 500) from a first state to a second state;
generating (710; 820; 850; 930; 1020) image information obtained by converting an image displayed on the display module (160) in the first state, in response to the driving state of the display module (160) changing from the first state to the second state;
storing (710; 830; 850; 940; 1020) the generated image information in a memory (130); and
outputting (720; 840; 870; 950; 1030) an image displayed on the display module (160) based on the stored image information, in response to determining that the display module (160) changes back from the second state to the first state.

9. The control method of claim 8, wherein
the generating (710; 820; 850; 930; 1020) of the image information by converting the image comprises generating the image information by converting the image displayed on the display module (160) through a neural processing unit (NPU).

10. The control method of claim 8 or claim 9, wherein
the generating (710; 820; 850; 930; 1020) of the image information by converting the image comprises generating the image information by converting the image displayed on the display module in the first state into a designated format.

11. The control method of any one of claims 8 to 10, wherein
the generating (710; 820; 850; 930; 1020) of the image information obtained by converting the image comprises generating information on an image obtained by combining images, into one layer, displayed on the display module (160) before the change.

12. The control method of any one of claims 8 to 11, wherein
the display module (160) comprises a first area on which a screen is displayed in response to the display module (160) being driven in the first state and a second area on which a screen is displayed in response to the display module (160) being driven in the second state.

13. The control method of claim 12, wherein
the determining of whether the driving state of the display module (160) changes from the first state to the second state comprises measuring through a sensor module (176; 530) an angle at which the display module (160) is folded.

14. The control method of any one of claims 8 to 13, wherein
the memory comprises:
a first memory configured to store the image information obtained by converting the image displayed on the display module (160) in the first state; and
a second memory configured to store the image information obtained by converting the image displayed on the display module (160) in the second state.

15. A non-transitory computer-readable storage medium storing instructions that, when executed by a processor, cause the processor to perform the control method of any one of claims 8 to 14.
